# EUROPEAN PATENT SPECIFICATION

(11) **EP 4 619 309 B1**
(45) Date of publication and mention of the grant of the patent: **28.10.2026**
(21) Application number: 23825280.3
(22) Date of filing: 09.11.2023
(51) Int. Cl.: B64F 1/02, B64G 1/64, B64U 70/90, B64U 70/93

(54) **MOVABLE PLATFORMS FOR VEHICLE CAPTURE ASSEMBLIES AND RELATED DEVICES, ASSEMBLIES, SYSTEMS, AND METHODS**
BEWEGLICHE PLATTFORMEN FÜR FAHRZEUGERFASSUNGSANORDNUNGEN UND ZUGEHÖRIGE VORRICHTUNGEN, ANORDNUNGEN, SYSTEME UND VERFAHREN
PLATEFORMES MOBILES POUR ENSEMBLES DE CAPTURE DE VÉHICULE ET DISPOSITIFS, ENSEMBLES, SYSTÈMES ET PROCÉDÉS ASSOCIÉS

(30) Priority: 18.11.2022 US 202217990245
(43) Date of publication of application: 24.09.2025
(73) Proprietor: Northrop Grumman Systems Corporation, Falls Church, VA 22042 (US)
(72) Inventor: SIMPRI, Emmanuel, Sterling, Virginia 20166 (US); PURCELL, Jack, Sterling, Virginia 20166 (US); MICHEL, Matthew Alan, Oak Hill, Virginia 20171 (US); FOSTER, Michael J., Sterling, Virginia 20166 (US); WILLIAMS, Quentin, Sterling, Virginia 20166 (US)
(74) Representative: IP TRUST SERVICES
(86) International application number: PCT/US2023/037110
(87) International publication number: WO 2024/107381

(56) References cited:
- EP-A1- 3 647 209
- US-A- 5 738 306
- US-A1- 2015 266 595
- US-A1- 2021 086 913
- US-B1- 6 354 540
- MEDINA ALBERTO ET AL: "Towards a standardized grasping and refuelling on-orbit servicing for geo spacecraft", ACTA ASTRONAUTICA, PERGAMON PRESS, ELMSFORD, GB, vol. 134, 19 January 2017 (2017-01-19), pages 1 - 10, XP029937659, ISSN: 0094-5765, DOI: 10.1016/J.ACTAASTRO.2017.01.022

## Description

### TECHNICAL FIELD

The present disclosure relates to systems, devices, assemblies, apparatus, and methods for vehicle (*e.g*., spacecraft) docking. In some embodiments, the present disclosure includes a probe movement feature, such as, for example, a movable platform, for use with vehicle capture assembly for engaging with an associated vehicle and related devices, systems, and methods.

### BACKGROUND

Docking assemblies and devices may be utilized to mechanically connect two or more vehicles (*e.g.,* spacecraft) to each other. Such spacecraft may be vehicles (*e.g.,* self-propelled vehicles) designed for short-term space flights and/or may be configured to remain in space for a long period of time. The spacecraft may be intended to perform a specific function in a space mission, such as supplying resources to and/or altering the orbit of a target vehicle. In some instances, the spacecraft may be a space station, satellite, or another suitable structure.

The connection of two or more spacecraft may enable the transfer of resources from one spacecraft to another spacecraft. For example, a spacecraft may dock with a space station to deliver crew and resources. In another example, a spacecraft may dock with a satellite to perform maintenance and repair of one or more components of that satellite. In yet an additional example, a spacecraft may dock with another vehicle to provide a specific mission function, such as, for example, a descent to or an ascent from an astronomical body or to transfer to a select location for the mission.

Conceptualized methods of docking to spacecraft consist of complex mechanical implements. However, mechanical complexity that is present in many of the above designs, particularly complexity associated with multi-axis servo motor and robotic control systems, increases the likelihood of component failure, which can result in failure in the docking and maintenance process. Further, relative motion between the docked vehicles and applied to the vehicles and the docking assemblies may jeopardize the docking procedure and may also cause damage to one or more of the vehicles and their respective docking assemblies.

EP 3647209 discloses a capture device for capturing satellites in space. The catching device comprises two legs each with a connecting bracket connecting the respective ends of the two legs to one another.

US6354540 discloses a fully androgynous, reconfigurable closed loop feedback controlled low impact docking system with load sensing electromagnetic capture ring.

US 2015266595 discloses an apparatus comprising elongate members, movement systems, and force management systems. The elongate members are associated with a docking structure for a spacecraft. The movement systems are configured to move the elongate members axially such that the docking structure for the spacecraft move

### BRIEF SUMMARY

In some aspects, the disclosure described herein relates to a movable platform according to claim 1.

In some aspects, the disclosure described herein relates to a vehicle capture system for use with a capture vehicle according to claim 11
In some aspects, the disclosure described herein relates to a method of capturing a spacecraft according to claim 12.

### BRIEF DESCRIPTION OF THE DRAWINGS

The drawings included in the present application are incorporated into, and form part of, the specification. They illustrate embodiments of the present disclosure and, along with the description, serve to explain the principles of the disclosure. The drawings are only illustrative of certain embodiments and do not limit the disclosure.
FIG. 1 is a schematic side view of a capture vehicle with a vehicle capture assembly and a target vehicle according to one or more embodiments of the disclosure.
FIG. 2 is an isometric view of a vehicle capture assembly in an initial position according to one or more embodiments of the disclosure.
FIG. 3 is an isometric view of a movable platform (*e.g*., a probe movement feature) in an initial position according to one or more embodiments of the disclosure.
FIGS. 4 and 5 are side views of a movable platform in displaced positions according to one or more embodiments of the disclosure.
FIGS. 6 and 7 are enlarged views of the movable platform in FIGS. 4 and 5, respectively, in displaced positions.
FIG. 8 is an isometric view of a movable platform in a displaced position according to one or more embodiments of the disclosure.

While the disclosure is amenable to various modifications and alternate forms, specifics thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure.

### DETAILED DESCRIPTION

As used herein, the terms "substantially," "about," and "approximate," in reference to a given parameter, means and includes to a degree that one skilled in the art would understand that the given parameter, property, or condition is met with a small degree of variance, such as within acceptable manufacturing tolerances. For example, a parameter that is substantially, about, or approximately met may be at least about 90% met, at least about 95% met, at least about 99% met, or even 100% met.

Embodiments of the present disclosure may include movable platforms for use with capture and mating assemblies and systems used for mechanical docking of two or more vehicles (*e.g*., spacecraft in orbit, with or without self-propulsion), using one or more vehicle capture device or assembly on the capture vehicle. Such vehicle capture assemblies are configured to engage with a docking portion of a target vehicle to be captured (*e.g*., one or more docking cones coupled to the target vehicle). Some embodiments may enable the autonomous capture and docking of spacecraft with relatively large mass and inertia, while incurring minimal disturbance to either vehicle. Some embodiments provide benefits in the form of a relatively simple and compact docking architecture with mechanical compliance for improved reliability and safety, that is, preventing damage to the spacecraft.

Some embodiments of the present disclosure may include a movable platform having movable joints or unions (*e.g.*, rotational joints) enabling the docking assembly to move relative to a capture vehicle on which the docking assembly is mounted. For example, the movable platform may include multiple sections (*e.g*., floors, lateral members, plates) that move relative to each other (*e.g*., lateral or radial movement in a direction that is transverse to a longitudinal axis of the assembly) of the docking assembly. Such a configuration may enable the lateral movement of the floors through rotation of the legs while keeping the floors substantially parallel to each other. In some embodiments, the rotation of the legs between multiple floors may act as a parallelogram-type movement (*e.g*., a double parallelogram-type movement) where each set of legs with opposing floors on either side of the legs defines a substantial parallelogram shape. Stated in another way, the rotation of the legs between multiple floors may move enable lateral movement between the floors while maintaining the floors in a substantially parallel orientation.

In some embodiments, the movement of the legs may minimize (*e.g.*, substantially prevent) rotation of the floors of the docking assembly relative to each. For example, such a configuration may substantially prevent rotation of the floors relative to each other with the legs or unions between the floors while enabling the lateral movement of the floors through rotation of the legs and keeping the floors substantially parallel to each other.

Embodiments of the disclosure enable angular displacement of one or more sets of legs that, in turn, enable lateral displacement of the floors relative to each other. At least some of the floors may attached to components of a vehicle capture system. For example, the floors may be attached, on one end of the movable platform, to a docking assembly and, on another end of the movable platform, to spacecraft (*e.g*., a chaser or capture vehicle).

Embodiments of the movable platform may include a biasing mechanism (e.g., springs, such as torsion springs). For example, the biasing mechanism may resist deflection for loads that are below a threshold level (*e.g*., about 1 N, 2 N, or more or less depending on the application) while enabling deflection once the threshold level is overcome. Once the threshold level is overcome, additional force may be required to continue moving the movable platform. For example, the deflection may increase as the loading (*e.g*., lateral loading) increases. The restorative nature of the biasing mechanism may assist to minimize any offset between the capture vehicle and the target vehicle during a capture and docking operation as the biasing mechanism tends to force the movable platform back to the initial position.

In some embodiments, the biasing mechanism may include a floating stop that acts to center the movable platform in an initial position and to force the movable platform back toward the initial position after a displacement. The use of the biasing mechanism including the floating stop may minimize or even eliminate deadband (*e.g*., play or slop) during movement of the movable platform between an initial position and a displaced position. For example, the biasing force acting on the floors via the legs may act to secure the flooring in the initial position until the threshold force is overcome enabling the floors to move while reducing or eliminating any unwanted movement (*e.g*., play) between the floors.

Embodiments of the movable platform may include linkages or legs (*e.g*., pairs of linkages or legs extending between floors). The legs rotate relative to pinned joints on each floor, enabling the floors to move relative to one another. Embodiments of the movable platform may utilize redundant revolute joints at the pinned linkage joints in order to reduce fault caused by friction as compared to alternative compliance devices. For example, if one revolute joint is to fail (*e.g.,* via binding, galling, etc.) the other joint may continue to operate under substantially normal conditions. In some embodiments, further reduction in friction, if desired, may be enabled through the use of rolling element bearings (*e.g*., ball bearings). A centering mechanism comprised of redundant torsion springs and one or more floating stops allows the mechanism to return to the nominal, centered position after an initial displacement of one or both of the movable platform floors. Preloads in the torsion springs also allow the mechanism to resist motion (*e.g*., substantially prevent) for loads less than a specific threshold.

In operation in space, a target vehicle and chaser vehicle generally cannot be perfectly aligned via rendezvous and proximity operations prior to docking operations. Compliance features in the docking mechanism may enable the successful completion of the docking operation and accommodate misalignments between the two vehicles. Embodiments of the movable platform may provide lateral compliance between the target vehicle and chaser vehicle in a relatively simple and compact manner by enabling lateral displacements of the docking mechanism relative to the chaser vehicle while reducing disturbances to the vehicles. The centering biasing mechanism may assist in removing misalignment between the two vehicles during the docking operation. Embodiments of the movable platform may be unique in that the movable platform utilizes redundant revolute joints, which enables greater fault tolerance (*e.g*., to friction-type failures) as compared to many similar solutions that tend to bind during use. Further, the movable platform may provide a compliance feature that may be packaged into a relatively shorter and more compact length along the boom as compared to other solutions.

In some embodiments, the biasing mechanism of the movable platform may act as attenuation elements or features to assist in dampening movement of the docking assembly (*e.g*., with the target vehicle at least partially coupled thereto) relative to the capture vehicle. Such docking assemblies may provide initial compliance for soft capture and/or may at least partially attenuate relative motion between the vehicles (*e.g*., before retraction of the docking assembly to a final rigidized connection).

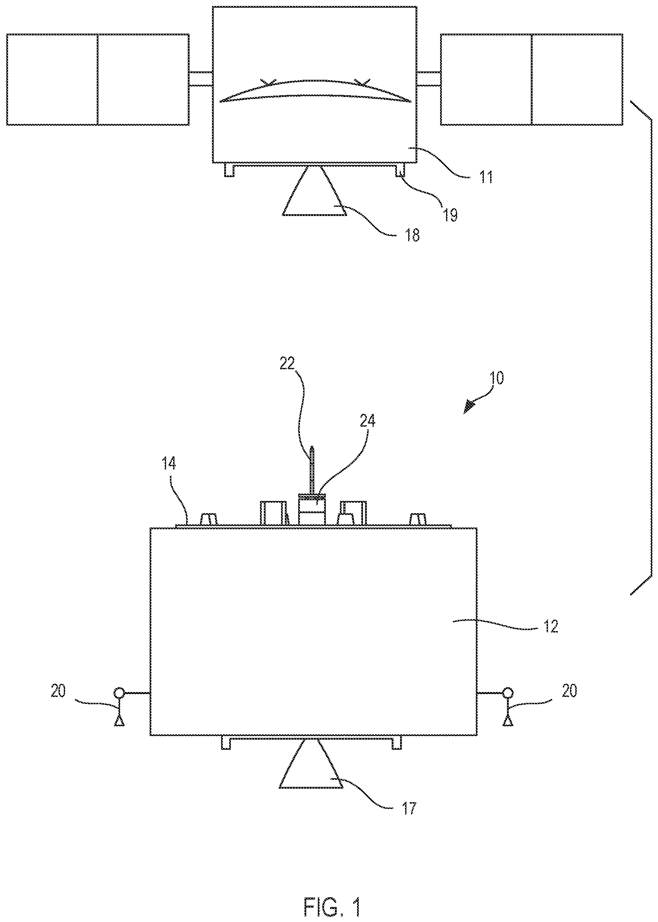

FIG. 1 depicts a schematic side view in which a capture vehicle 10 (*e.g.,* a servicing vehicle, a chaser spacecraft, a transfer spacecraft, etc.) may be operated to approach, capture, dock to, supply, transfer cargo or resources to, and/or service a target vehicle 11, according to one or more embodiments of the disclosure.

Capture vehicle 10 and target vehicle 11 each may be a spacecraft or a satellite situated in orbit around a body. The capture vehicle 10 may be a spacecraft designed to approach, capture, dock to, and undock from the target vehicle 11. Docking of the capture vehicle 10 to target vehicle 11 may enable a specific function in a space mission. For example, the connection of the vehicles 10, 11 may enable the transfer of resources (*e.g*., cargo, equipment, passengers, crew, etc.) from one vehicle to another vehicle, may enable vehicle repair, and/or may enable a specific mission function (*e.g*., a descent to or an ascent from an astronomical body or to transfer to a select location in space for the mission).

Capture vehicle 10 may be designed to dock with more than one target vehicle 11. For example, the capture vehicle 10 may be provided with a docking mechanism (*e.g*., vehicle capture assembly 22) that enables the capture vehicle 10 to dock and undock from multiple target vehicles 11. The capture vehicle 10 may be configured to dock with one or more of the target vehicles 11 comprising one or more docking elements 18 (*e.g.,* a docking cone, an engine, etc.).

As discussed below in greater detail, the vehicle capture assembly 22 may include a movable platform 24 including one or more attenuation elements or features to assist in enabling movement of the vehicle capture assembly 22 relative to the capture vehicle 10 while also dampening such movement of the vehicle capture assembly 22 (e.g., with the target vehicle 11 at least partially coupled thereto) relative to the capture vehicle 10. The vehicle capture assembly 22 and the movable platform 24 may provide initial compliance for soft capture of the target vehicle 11 and/or may at least partially attenuate relative motion between the vehicles 10, 11 (*e.g*., before retraction of the vehicle capture assembly 22 to a final rigidized connection).

In some embodiments, the movable platform 24 may be passive. For example, the movable platform 24 may function in a manner that does not require the use of active components such as a motor directly actuating the movable platform 24 (*e.g.,* is not required to be driven in an active manner). The movable platform 24 may use passive methodology or mechanisms, such as mechanical forces (*e.g*., biasing members, dampening mechanisms, etc.) to enable movement of the vehicle capture assembly 22. In additional embodiments, the movable platform 24 may include active (*e.g*., actively driven) components enabling and/or regulating motion in one or more of the degrees of freedom.

As depicted, the capture vehicle 10 may include a spacecraft body 12, a docking platform 14, a main thruster 17, gimbaled thrusters 20, and the vehicle capture assembly 22. As noted above, the vehicle capture assembly 22 may include retention elements that directly contact and secure the target vehicle 11 in a manner that does not require the use of active components such as a motor directly actuating the retention elements. Rather, the retention elements may use passive methodology or mechanisms, such as mechanical forces (*e.g*., biasing forces), to engage with the target vehicle 11.

As discussed below, while a motor (*e.g.*, only a single and solitary motor) may be used to actively move (*e.g*., translate) the vehicle capture assembly 22 toward and/or away from the target vehicle 11, such a motor may only indirectly contribute to the engagement and/or disengagement of the retention elements. For example, while the motor may place the retention elements in a selected position relative to the target vehicle, a force applied to the vehicle capture assembly 22 may be utilized to engage and/or disengage the retention elements (*e.g*., a force overcoming one or more biasing elements of the vehicle capture assembly 22) in a passive manner that is not actively driven by a motor or an otherwise electronic device.

Target vehicle 11 may be a spacecraft to be captured by the vehicle capture assembly 22 of the capture vehicle 10. Target vehicle 11 may be in low earth orbit, medium earth orbit, geosynchronous orbit, beyond geosynchronous orbit, or in another orbit around an astronomical body, for example, such as Earth, a moon, or another planetary body. Target vehicle 11 may include the docking element 18 and a separation ring 19.

Vehicle capture assembly 22 of capture vehicle 10 may be configured to capture target vehicle 11 at docking element 18 and to pull target vehicle 11 and capture vehicle 10 together for docking. When docked, one or more portions of the target vehicle 11 and/or vehicle capture assembly 22 may abut and retain the vehicles 10, 11 together.

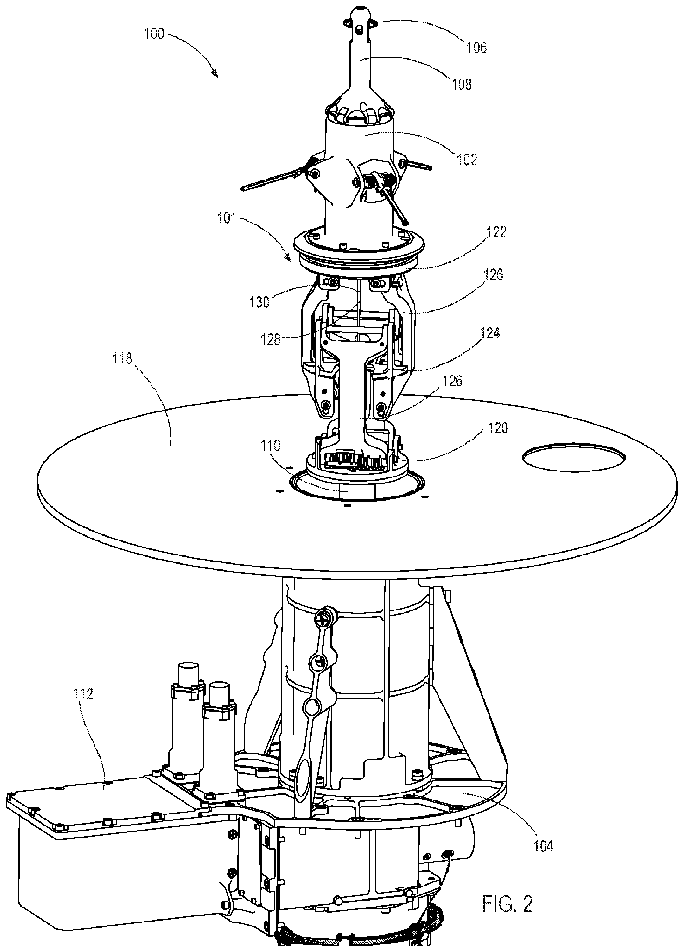

FIG. 2 depicts an isometric view of a vehicle capture assembly 100 in an initial position that may be used with a capture vehicle. In some embodiments, vehicle capture assembly 100 may be similar to, and include similar components and features of, the vehicle capture assembly 22 of the capture vehicle 10 which is depicted schematically in FIG. 1 and discussed above. In some embodiments, the vehicle capture assembly may be similar to that disclosed in United States Patent Application Serial No. 17/207,646, filed March 20, 2021, published as US 2021/0339893 A1, and/or United States Patent Application Serial No. 15/829,807, filed December 10, 2017, issued as U.S. Patent 11,104,459.

As shown in FIG. 2, the vehicle capture assembly 100 includes a probe or probe assembly 102 coupled to a lance or lance assembly 104 (*e.g.,* coupled via a movable platform 101 at a distal portion or end of the lance assembly 104). The probe assembly 102 includes one or more retention features (*e.g*., barbs 106) that extend from the probe assembly 102 at a location proximate a probe tip 108. The barbs 106 may extend in a direction transverse to a length or longitudinal axis of one or more portions of the vehicle capture assembly 100 (*e.g*., lateral to a length of the lance assembly 104). As depicted, the rotatable barbs 106 extend laterally outward and in a proximal direction toward the lance assembly 104 in order to capture a target vehicle 11 (FIG. 1).

In some embodiments, the barbs 106 may be biased (*e.g*., spring-loaded) in a selected position. For example, the barbs 106 may be in the depicted deployed position where the barbs 106 may couple with a portion of the target vehicle 11 (FIG. 1). In additional embodiments, the barbs 106 may be biased in a retracted or stowed position.

Referring to FIGS. 1 and 2, the lance assembly 104 may include functionality that enables extension and/or retraction of a portion of the probe assembly 102 to facilitate docking of capture vehicle 10 with target vehicle 11. For example, when capture vehicle 10 is positioned proximate to the target vehicle 11, the probe assembly 102 may be extended to and inserted into the docking element 18 of the target vehicle 11 with the lance assembly 104. The lance assembly 104 may include a lance boom 110 that is driven by a motor 112 of the probe assembly 102. The motor 112 may be used to actively move (*e.g*., translate) the lance boom 110 toward and/or away from the target vehicle 11.

In some embodiments, the motor 112 may only indirectly contribute to the engagement and/or disengagement of the barbs 106. For example, while the motor 112 may place the barbs 106 in a selected position relative to the target vehicle 11, force applied to the barbs 106 (*e.g.,* to overcome the biasing force of the barbs 106 into the deployed position) may be applied as the barbs 106 are inserted into the docking element 18 to engage the barbs 106 in a passive manner that is not actively driven by the motor 112. As discussed below, movement of the probe assembly 102 (*e.g.,* by forcing the probe assembly 102 into the target vehicle 11) may be used to release the barbs 106 from the target vehicle 11 (*e.g.,* by overcoming the biasing forces of the barbs 106 in a different manner with internal components of the probe assembly 102).

The vehicle capture assembly 100 may include a backstop plate 118 for mating with a portion of the target vehicle 11 (*e.g.,* the docking element 18 in the captured position).

As depicted, the vehicle capture assembly 100 includes a probe movement feature (*e.g*., a movable platform 101). In some embodiments, the movable platform 101 may be similar to the movable platform 24 discussed above.

As depicted, the movable platform 101 may include floors at opposing ends of the movable platform 101 (*e.g.,* a first end floor 120 and a second end floor 122). For example, the first end floor 120 may be coupled (*e.g*., rigidly coupled in a substantially immovable manner) to the capture vehicle 10 (FIG. 1). The second end floor 122 may be coupled (*e.g*., rigidly coupled) to the vehicle capture assembly 100 (*e.g.,* to the probe assembly 102).

The second end floor 122 may be movably coupled to the first end floor 120 via one or more movable unions or joints to enable the second end floor 122 to move relative to both the first end floor 120 and the capture vehicle 10. Each of the movable unions (*e.g*., linkages, legs 126, etc.) may provide at least one degree of freedom of movement between the second end floor 122 and the first end floor 120. As discussed above, the movable unions may limit movement between the second end floor 122 and the first end floor 120 to primarily translational movement (*e.g*., lateral, side-to-side translation in a direction transverse to a direction of movement of the lance assembly 104) while keeping the second end floor 122 and the first end floor 120 in an orientation substantially parallel to each other.

As depicted, an intermediate floor 124 may be positioned between the first end floor 120 and the second end floor 122. Sets of legs 126 may extend between each of the floors 120, 122, 124 and the legs 126 may rotate relative to two of the respective floors 120, 122, 124 to which each leg 126 is connected (*e.g*., via a rotational joint, such as a pinned union). Rotation of the legs 126 may respectively enable each of the floors 120, 122, 124 to move laterally relative to each other in a lateral direction or axis and/or radial direction or axis that is transverse (*e.g*., substantially perpendicular) to a longitudinal axis of the lance assembly 104 along which the lance boom 110 moves.

In some embodiments, the movable platform 101 may include central openings to accommodate a central lanyard 128 (*e.g*., housed within a flexible conduit 130) extending through the movable platform 101. The central lanyard 128 and accompanying flexible conduit 130 may both be bendable to accommodate movement of the floors 120, 122, 124 of the movable platform 101. The central lanyard 128 may be coupled to and act to move the barbs 106. For example, the central lanyard 128 may pull on the barbs 106 to retract the barbs 106 and release the target vehicle 11.

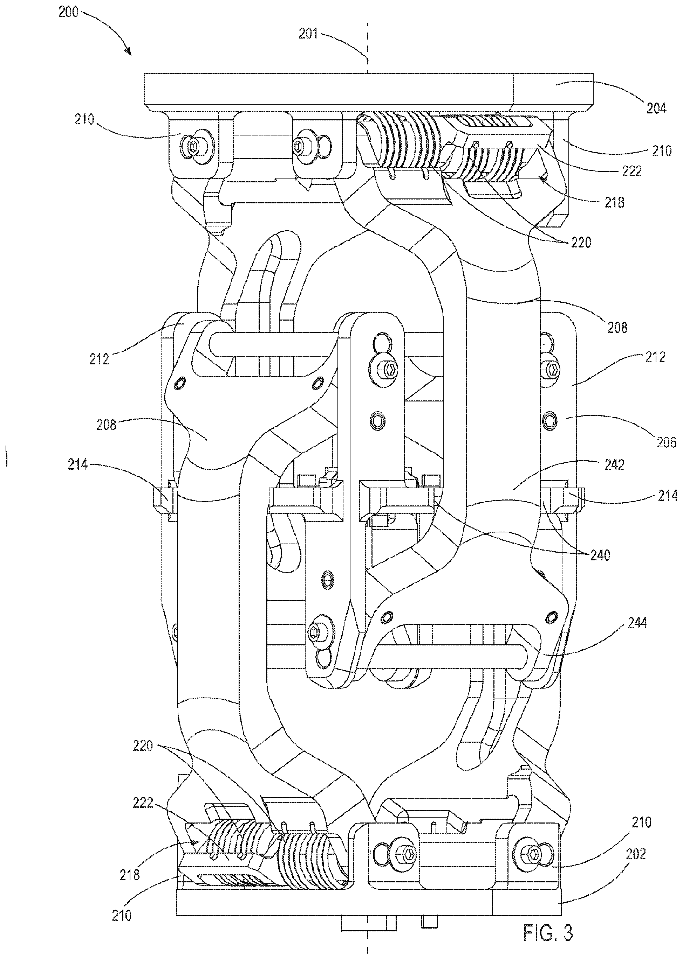

FIG. 3 is an isometric view of a movable platform 200. In some embodiments, the movable platform 200 may be similar to the movable platforms 24, 122 discussed above.

As depicted, the movable platform 200 may include end members, sections, or plates (*e.g*., a first floor 202 and a second floor 204) where one of the first floor 202 or the second floor 204 may be coupled (*e.g*., rigidly coupled) to the capture vehicle 10 (FIG. 1) while the other is coupled to at least a portion of the vehicle capture assembly 100 (FIG. 2).

The second floor 204 may be movable (*e.g*., primary translatable) relative to the first floor 202 via one or more movable unions or legs 208 to enable the second floor 204 to move relative to both the first floor 202 and the capture vehicle 10 in a direction transverse to (*e.g*., substantially perpendicular to) a longitudinal axis 201 or centerline of the movable platform 200. The movable unions or legs 208 may provide at least one degree of freedom of movement (*e.g.,* substantially lateral translational movement) between the second floor 204 and the first floor 202. For example, the movable platform 200 may include the first floor 202 coupled to the second floor 204 via the legs 208 to enable the vehicle capture assembly 100 to translate along a lateral axis of movement as the floors 202, 204 move laterally relative each other.

As depicted, an intermediate structure or central member (*e.g*., at least one intermediate floor 206) may be positioned between the first floor 202 and the second floor 204. Legs 208 may extend between each of the floors 202, 204, 206. For example, a first set of the legs 208 (*e.g*., two radially opposing legs 208) may extend between the first floor 202 and the intermediate floor 206 and a second set of the legs 208 may extend between the second floor 204 and the intermediate floor 206. The first set of the legs 208 may be offset from the second set of the legs 208 (*e.g*., offset about 180 degrees about the longitudinal axis 201). As discussed below, in some embodiments, the first and second sets of legs 208 may partially overlap along the longitudinal axis 201 such that the first and second sets of legs 208 coextend along a portion of the longitudinal axis 201 while being coupled at opposite ends of the intermediate floor 206 to define an at least partially nested structure.

The legs 208 may rotate relative to two of the respective floors 202, 204, 206 to which each leg 208 is connected (*e.g*., via a rotational joint, such as a pinned union). Rotation of the legs 208 may respectively enable each of the floors 202, 204, 206 to move in a lateral direction that is transverse (*e.g*., substantially perpendicular) to the longitudinal axis 201. Floors 202, 204 may include brackets 210 extending from one side of the respective floor 202, 204. Intermediate floor 206 may include brackets 212 extending from both sides of a central structure 214 of the intermediate floor 206. The brackets 212 and the legs 208 may be configured such that the legs 208 may respectively couple with brackets 212 positioned relatively further away from the brackets 210 on the other floor 202, 204 to which the leg 208 is coupled. For example, a central portion of the legs 208 (*e.g*., central rib 242) may be rounded or curved to pass around the central structure 214 of the intermediate floor 206 to couple with a distal set of brackets 212. As noted above, such a configuration enable the legs 208 to overlap along the longitudinal axis 201 to define a nested structure (*e.g*., a relatively more compact structure).

The movable platform 200 may include one or more biasing mechanisms 218 to bias the movable platform 200 in an initial position (*e.g*., as shown in FIG. 3). As depicted, the biasing mechanism 218 may comprise torsion springs 220 positioned between one or more of the legs 208 and a respective one of the floors 202, 204, 206. While the biasing mechanism 218 is discussed herein primarily as torsion springs 220, in additional embodiments, other biasing mechanisms may be implemented (*e.g*., dampening mechanisms, differing spring configurations, etc.).

In some embodiments, the biasing mechanism 218 may include a set of torsion springs 220 positioned at an interface or union between a leg 208 and respective bracket 210 of the floors 202, 204. As depicted, only one leg 208 of each set may include the torsion springs 220 positioned at the outer end floors 202, 204. In additional embodiments, the torsion springs 220 may be positioned on one or more of the legs 208 at the union with the intermediate floor 206 (*e.g.,* as shown in FIG. 2).

As discussed above, the torsion springs 220 (*e.g*., along with a floating stop 222, which is described in detail below) may bias the movable platform 200 in the initial position as depicted in FIG. 3. The torsion springs 220 may act to return the movable platform 200 substantially to the initial position after a force applied to the movable platform 200 causes the legs 208 to rotate in order displace to one or more of floors 202, 204, 206. As also discussed above, the torsion springs 220 may secure the floors 202, 204, 206 until a threshold force (*e.g.,* 1N, 2N, etc.) is applied to or between one or more of the floors 202, 204, 206. Once the threshold force is exceeded, one or more sets of the legs 208 may begin to rotate enabling one or more of the floors 202, 204, 206 to move relative to each other. In such an embodiment, the torsion springs 220 (*e.g.,* along with the floating stop 222) may substantially prevent any movement (*e.g.,* slop) in the floors 202, 204, 206 until the threshold force is applied. For example, the torsion springs 220 and/or the floating stop 222 may act to minimize or eliminate any deadband in the movement of the floors 202, 204, 206. Once the threshold force is applied, the legs 208 may enable translation of one or more of floors 202, 204, 206 to move.

In some embodiments, rotation of the legs 208 may be limited by a hardstop provided by the movable platform 200. For example, a portion of the intermediate floor 206 (*e.g.,* cutout portion 240) may contact the central rib 242 of the legs 208 (*e.g.,* between bracket portions 244 at either end of the leg 208) to provide a hardstop for rotation of the legs 208 and translation of one or more of the floors 202, 204, 206.

As noted above, in some embodiments, the biasing mechanisms disclosed herein may act to attenuate movement during a docking procedure. For example, the biasing features may dampen transitional forces between the vehicles 10, 11 (FIG. 1) as the docking assembly 100 is inserted in a docking cone of the target vehicle 11.

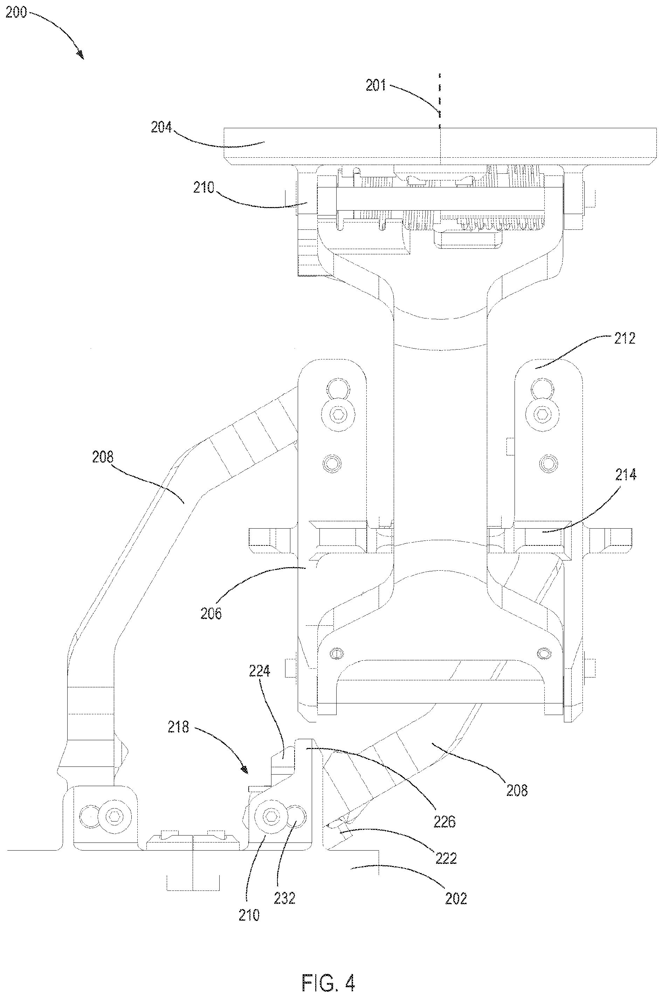

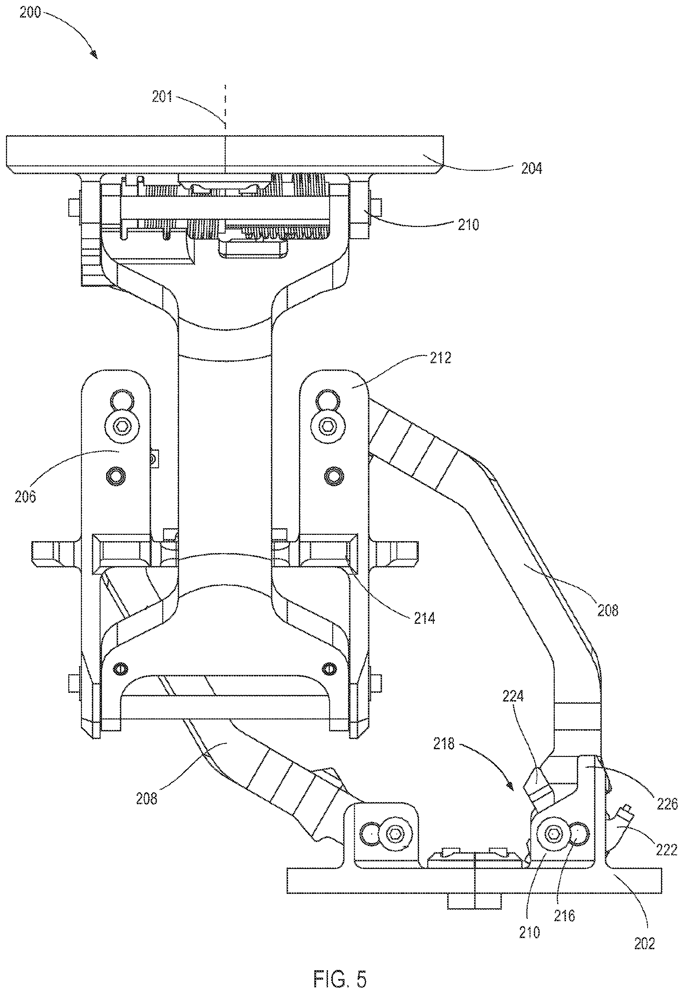

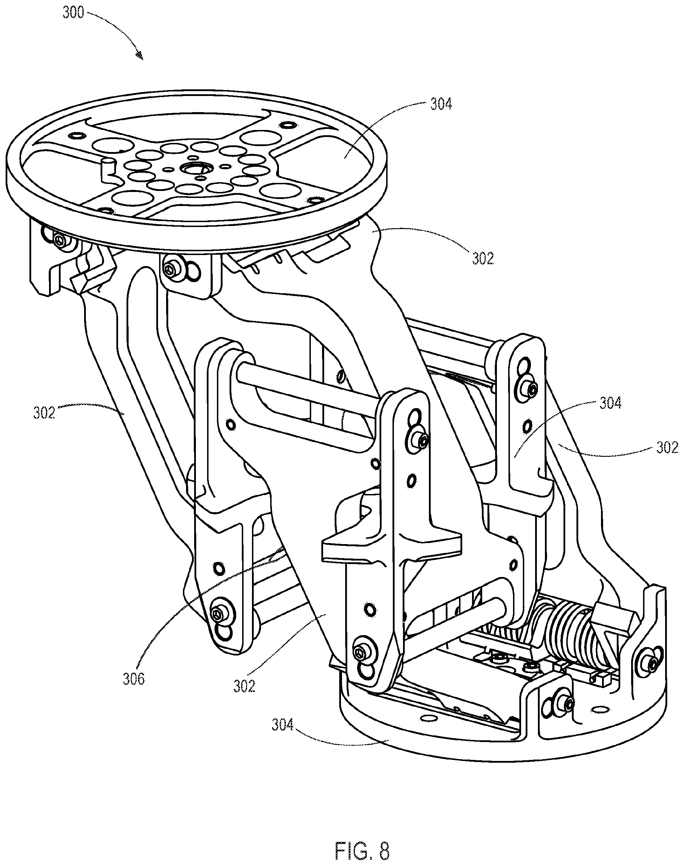

FIGS. 4 and 5 are side views of a movable platform (*e.g*., movable platform 200) being displaced. For example, FIG. 4 shows a set of the legs 208 (*e.g.,* the legs 208 extending between the first floor 202 and the intermediate floor 206) rotating in a clockwise direction (*e.g*., about 30 degrees in the clockwise direction as depicted in FIG. 4). For clarity, only one set of the legs 208 is shown as rotating; however, the other set may also rotate in a similar manner in either direction (*e.g*., as shown in FIG. 8). FIG. 5 shows the set of the legs 208 (rotating in a counterclockwise direction (*e.g*., about 30 degrees in the counterclockwise direction as depicted in FIG. 5). In additional embodiments, the legs 208 may rotate more or less than 30 degrees in either direction (*e.g*., ±15, 45, 60, 75, 90 degrees or variations in between).

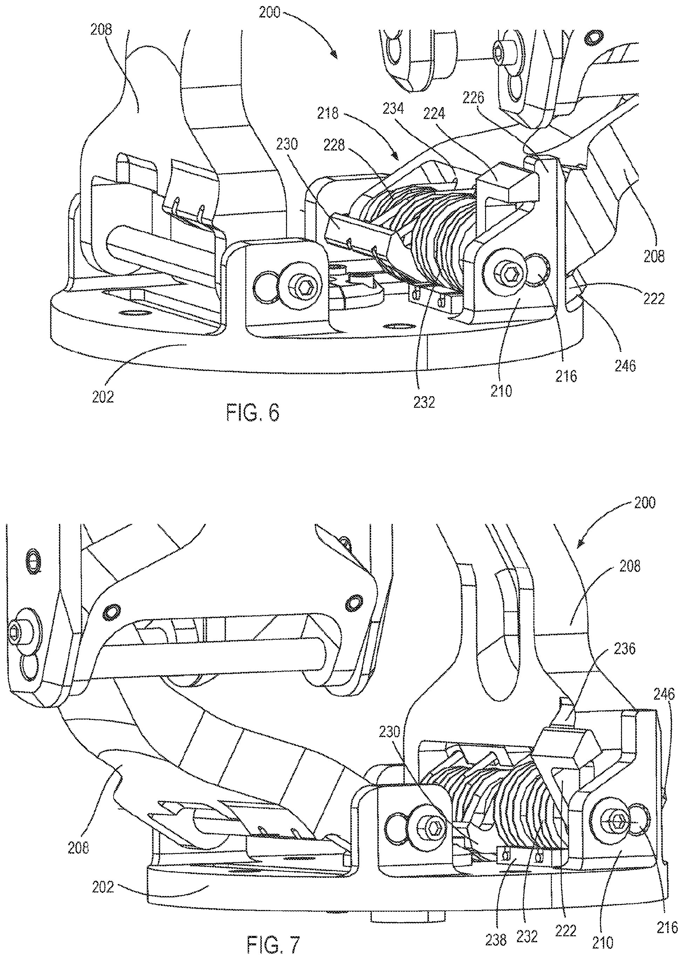

FIGS. 6 and 7 are enlarged views of the movable platform 200 in the positions shown in FIGS. 4 and 5, respectively. FIGS. 6 and 7 are enlarged for clarity to describe the function of a floating stop 222 that may be utilized in unison with (*e.g*., may be part of) the biasing mechanism 218 in order to minimize any deadband in the movement of the movable platform 200, as is discussed above. Similar to the legs 208, the floating stop 222 may be rotatably coupled to a respective bracket (*e.g*., bracket 210 via a pinned connection 216).

Referring to FIGS. 4 and 6, as depicted, rotation of the lower set of legs 208 translates both the second floor 204 and the intermediate floor 206 relative to the first floor 202 in a lateral direction that is transverse to (*e.g.,* set across) the longitudinal axis 201. Due to the rotation of the legs 208, the second floor 204 and the intermediate floor 206 will also move along the longitudinal axis 201 (*e.g.,* to move relatively closer or further away from each other). However, as discussed herein, the lateral movement between the floors 202, 204, 206 may be the primary type and/or direction of movement for the movable platform 200 (*e.g*., constituting a majority of the displacement). In use, the second floor 204 and the intermediate floor 206 translate relative to the first floor 202, which may be coupled to the capture vehicle 10 (FIG. 2), in order to move the second floor 204, which is coupled to a probe assembly 102 (FIG. 2) to move transversely and/or laterally relative to the target spacecraft 11 (FIG. 2) during a docking procedure. Rotation of the upper set of legs 208 (*e.g*., into or out of the page as depicted in FIG. 4) may further translate the second floor 204 relative to the first floor 202 and the intermediate floor 206 (*e.g.,* as shown in FIG. 8). After displacement, the biasing mechanism 218 may act to force the second floor 204 and the intermediate floor 206 back to being substantially aligned with the longitudinal axis 201 in the initial position. Such alignment may act to align the movable platform 200 with a portion of the target vehicle 11 (*e.g*., with a centerline of the docking element 18 of the target vehicle 11).

During the rotation of the legs 208, the floating stop 222 may remain in an initial position (*e.g*., remain stationary) where a stop portion 224 of the floating stop 222 is engaged with a fixed surface of the movable platform 200 (*e.g.,* a fixed portion 226 of one of the brackets 210 creating a hardstop for the floating stop 222 in one direction). Stated in another way, in the movement shown in FIGS. 4 and 6, the floating stop 222 is substantially fixed (*e.g.,* the floating stop 222 does not substantially rotate as the floating stop 222 is secured by interaction between the stop portion 224 and fixed portion 226 of the bracket 210). The leg 208 may apply a force against one or more of the torsion springs 220 (*e.g.,* by twisting torsion spring 228) to overcome the biasing force of the torsion spring 228. As depicted, a first set of ends of the torsion spring 228 may be secured by a first movable bracket portion 230 of the floating stop 222. A second set of end of the torsion spring 228 may be secured to the leg 208 (*e.g.,* at leg bracket 234).

As depicted, a portion of the floating stop 222 (*e.g.,* a second movable bracket portion 246) may act as a hardstop to the leg 208.

Once the force is removed, the torsion spring 228 may return the leg 208 to the initial position.

Referring to FIGS. 5 and 7, as depicted, rotation of lower set of legs 208 translates both the second floor 204 and the intermediate floor 206 relative to the first floor 202 in a counterclockwise direction, similar to the reverse movement in FIGS. 4 and 6 discussed above.

During the rotation of the legs 208 in the counterclockwise direction shown in FIGS. 5 and 7, the floating stop 222 may also rotate in a counterclockwise direction causing the stop portion 224 to move away from the fixed portion 226 of one of the brackets 210. In some embodiments, a hardstop 236 on the leg 208 may contact the stop portion 224 of the floating stop 222 to rotate the floating stop 222.

The leg 208 may apply a force against one or more of the torsion springs 220. For example, force applied to the leg 208 may rotate the floating stop 222 and, in turn, twist torsion spring 232, to overcome the biasing force of the torsion spring 232. As depicted, ends of the torsion spring 232 may be secured by the second movable bracket portion 246 of the floating stop 222 (also shown in FIGS. 5 and 6). A second set of ends of the torsion spring 232 may be secured to the floor 202 (*e.g.,* at floor bracket 238).

When the floating stop 222 rotates a selected amount (*e.g*., when a portion of the first movable bracket portion 230 contacts the first floor 202), the floating stop 222 acts as a hardstop to the leg 208.

Referring back to FIG. 4, in some embodiments, similar to the above, rotation of the legs 208 may be limited by one or more of the floating stop 222 or the hardstop provided by the movable platform 200. For example, the cutout portion 240 of the intermediate floor 206 may contact the central rib 242 of the leg 208 to provide the hardstop for rotation of the leg 208 and translation of one or more of the floors 202, 204, 206.

As above, once the force is removed, the torsion spring 232 may return the leg 208 to the initial position.

As also discussed above, the floating stop 222 may enable a configuration with substantially little to no backlash when moving between the initial and displaced positions.

FIG. 8 is an isometric view of a movable platform 300 shown with multiple sets of legs 302 rotating the movable platform 300 in a displaced position. In some embodiments, the movable platform 300 may be similar to the movable platforms 24, 122, 200 discussed above.

As depicted, each of floors 304 may move relative to each other along one or more translational degrees of freedom (*e.g*., along the x-axis, the y-axis, and/or the z-axis) in order to enable the opposing end floors to move laterally relative to each other and then to be biased back into an initial position where the floors 304 are substantially laterally aligned relative to each other. The rotation of the legs 302 between each of the floors 304 may act as a double parallelogram-type movement where each set of legs 302 with opposing floors 304 on either side of the legs 302 define a substantial parallelogram shape. For example, the rotation of the legs 302 between the floors 304 may move the floors 304 relative to each other while maintaining the floors 304 in a substantially parallel orientation and without substantially rotating the floors 304 (*e.g.,* changing the rotational position and/or orientation of the floors 304).

In some embodiments, the movable platform 300 may include one or more electrostatic discharge (ESD) features, such as, for example, ground wires 306 or a braid may extend between the legs 302 and the floors 304.

While certain embodiments discussed herein are directed to the movable platforms having one or more degrees of translational freedom (*e.g*., three degrees), other embodiments may include other variations of degrees of freedom (*e.g*., even with some rotational freedom if desired in a select application).

The embodiments of the disclosure described above and illustrated in the accompanying drawing figures do not limit the scope of the disclosure, since these embodiments are merely examples of embodiments of the disclosure. The disclosure is defined by the appended claims. Indeed, various modifications of the present disclosure, in addition to those shown and described herein, such as alternative useful combinations of the elements described, will become apparent to those of ordinary skill in the art from the description. The terminology used herein was chosen to explain the principles of the embodiments, the practical application or technical improvement over technologies found in the marketplace, or to enable others of ordinary skill in the art to understand the embodiments disclosed herein.

## Claims

1. A movable platform (300,200,101) for use with a vehicle capture assembly (100) of a capture vehicle, the movable platform (300,200,101) comprising:
a first floor configured to be coupled with a portion of the vehicle capture assembly (100) proximate the capture vehicle;
a second floor configured to be coupled with a probe assembly (102) of the vehicle capture assembly (100); and
at least one set of legs (302,208,126) extending between the first floor and the second floor, the at least one set of legs (302,208,126) being rotationally coupled to at least one of the first floor or the second floor and configured to rotate relative to the at least one of the first floor or the second floor;
wherein rotation of the at least one set of legs (302,208,126) relative to the at least one of the first floor or the second floor enables the movable platform (300,200,101) to move from an initial position to a displaced position as the first floor translates laterally relative to the second floor in a direction transverse to a longitudinal axis (201) of the movable platform (302,208,126); and
**characterized by** at least one intermediate floor (206) between the first floor and the second floor, the first floor coupled to the at least one intermediate floor (206) on a first side of the at least one intermediate floor (206) with a first set of the at least one set of legs (302,208,126), the second floor coupled to the at least one intermediate floor (206) on a second side of the at least one intermediate floor (206) with a second set of the at least one set of legs (302,208,126).

2. The movable platform (300,200,101) of claim 1, wherein the first set of the at least one set of legs (302,208,126) is offset from the second set of the at least one set of legs (302,208,126) about the longitudinal axis (201) of the movable platform (300,200,101).

3. The movable platform (300,200,101) of claim 1, wherein the first set of the at least one set of legs (302,208,126) and the second set of the at least one set of legs (302,208,126) partially overlap along the longitudinal axis (201) of the movable platform (300,200,101).

4. The movable platform (300,200,101) of claim 1, wherein the first set of the at least one set of legs (302,208,126) and the second set of the at least one set of legs (302,208,126) exhibit a nested configuration where a portion of the first set of the at least one set of legs (302,208,126) extends along the longitudinal axis (201) of the movable platform (300,200,101) past a portion of the second set of the at least one set of legs (302,208,126).

5. The movable platform of any one of claims 1 through 4, further comprising a biasing mechanism (218) configured to bias the movable platform (300,200,101) in the initial position.

6. The movable platform (300,200,101) of claim 5, wherein the biasing mechanism (218) comprises torsion springs (220) positioned at least one union between the at least one set of legs (302,208,126) and the at least one of the first floor or the second floor.

7. The movable platform (300,200,101) of claim 5, wherein the biasing mechanism (218) comprises a floating stop (222), the floating stop (222) configured to rotate against a biasing force of the biasing mechanism (218) when the at least one set of legs (302,208,126) rotate in one rotational direction relative to the at least one of the first floor or the second floor.

8. The movable platform (300,200,101) of claim 7, wherein the floating stop (222) is configured to remain stationary when the at least one set of legs (302,208,126) rotate against the biasing force of the biasing mechanism (218) in another rotational direction relative to the at least one of the first floor or the second floor, the another rotational direction opposing the one rotational direction.

9. The movable platform (300,200,101) of any one of claims 1 through 4, wherein one or more portions of the movable platform (300,200,101) define at least one hardstop (236) configured to stop rotation of the at least one set of legs (302,208,126) relative to the at least one of the first floor or the second floor.

10. The movable platform (300,200,101) of any one of claims 1 through 4, wherein the movable platform (300,200,101) is configured to maintain a rotational orientation of the first floor relative to the second floor as the second floor translates relative to the first floor.

11. A vehicle capture system for use with a capture vehicle, the vehicle capture system comprising:
a probe assembly (102) including one or more retention elements for engaging with and securing a target vehicle; and
a movable platform (300,200,101) coupled to at least a portion of the probe assembly, the movable platform (300,200,101) comprising the movable platform (300,200,101) of any one of claims 1 through 10.

12. A method of capturing a spacecraft, the method comprising:
extending a probe of a vehicle capture assembly (100) toward a target spacecraft on a boom, the vehicle capture assembly (100) being coupled to a capture vehicle;
enabling motion of the probe relative to the capture vehicle with a movable platform (300,200,101), a first lateral section of the movable platform (300,200,101) coupled to the probe and a second lateral section of the movable platform (300,200,101) coupled to the boom with a first set of rotatable legs (302,208,126) extending between the first lateral section and a first side of at least one intermediate floor (206) and a second set of rotatable legs (302,208,126) extending between a second side of the at least one intermediate floor (206) and the second lateral section, the enabling motion of the probe relative to the capture vehicle with the movable platform (300,200,101) comprising:
translating the first lateral section relative to the second lateral section from the initial position by rotating the legs (302,208,126) relative to the first lateral section and the second lateral section; and
while translating the first lateral section relative to the second lateral section, substantially maintaining a rotational position of the probe; and
engaging the probe of the vehicle capture assembly (100) with the target spacecraft.

13. The method of claim 2, further comprising, after translating the first lateral section relative to the second lateral section, returning the movable platform (300,200,101) to an initial position with a biasing mechanism (218).

14. The method of claim 13, further comprising minimizing deadband in the movable platform (300,200,101) by securing the movable platform (300,200,101) in the initial position with the biasing mechanism and enabling the movable platform (300,200,101) to move to a displaced position when a force threshold is exceeded.

15. The method of any one of claims 12 through 14, further comprising biasing the movable platform (300,200,101) in an initial position with a biasing mechanism (218).

## Patentansprüche

1. Bewegbare Plattform (300,200,101) zur Verwendung mit einer Fahrzeugerfassungsanordnung (100) eines Erfassungsfahrzeugs, die bewegbare Plattform (300,200,101) umfassend:
einen ersten Boden, der konfiguriert ist, um mit einem Abschnitt der Fahrzeugerfassungsanordnung (100) nahe dem Erfassungsfahrzeug gekoppelt zu werden;
einen zweiten Boden, der konfiguriert ist, um mit einer Sondenanordnung (102) der Fahrzeugerfassungsanordnung (100) gekoppelt zu werden; und
mindestens einen Satz Beine (302,208,126), der sich zwischen dem ersten Boden und dem zweiten Boden erstreckt, wobei der mindestens eine Satz Beine (302,208,126) mit mindestens einem des ersten Bodens oder des zweiten Bodens drehbar gekoppelt ist und konfiguriert ist, um sich relativ zu dem mindestens einen des ersten Bodens oder des zweiten Bodens zu drehen;
wobei eine Drehung des mindestens einen Satzes Beine (302,208,126) relativ zu dem mindestens einen des ersten Bodens oder des zweiten Bodens ermöglicht, dass sich die bewegbaren Plattform (300,200,101) von einer Ausgangsposition in eine Verlagerungsposition bewegt, während sich der erste Boden relativ zu dem zweiten Boden in einer Richtung quer zu einer Längsachse (201) der bewegbaren Plattform (302,208,126) lateral verschiebt; und
**gekennzeichnet durch** mindestens einen Zwischenboden (206) zwischen dem ersten Boden und dem zweiten Boden, wobei der erste Boden an den mindestens einen Zwischenboden (206) auf einer ersten Seite des mindestens einen Zwischenbodens (206) mit einem ersten Satz des mindestens einen Satzes Beine (302,208,126) gekoppelt ist, wobei der zweite Boden an den mindestens einen Zwischenboden (206) auf einer zweiten Seite des mindestens einen Zwischenbodens (206) mit einem zweiten Satz des mindestens einen Satzes Beine (302,208,126) gekoppelt ist.

2. Bewegbare Plattform (300,200,101) nach Anspruch 1, wobei der erste Satz des mindestens einen Satzes Beine (302,208,126) gegenüber dem zweiten Satz des mindestens einen Satzes Beine (302,208,126) um die Längsachse (201) der bewegbaren Plattform (300,200,101) versetzt ist.

3. Bewegbare Plattform (300,200,101) nach Anspruch 1, wobei der erste Satz des mindestens einen Satzes Beine (302,208,126) und der zweite Satz des mindestens einen Satzes Beine (302,208,126) sich entlang der Längsachse (201) der bewegbaren Plattform (300,200,101) teilweise überlappen.

4. Bewegbare Plattform (300,200,101) nach Anspruch 1, wobei der erste Satz des mindestens einen Satzes Beine (302,208,126) und der zweite Satz des mindestens einen Satzes Beine (302,208,126) eine verschachtelte Konfiguration aufweisen, wobei sich ein Abschnitt des ersten Satzes des mindestens einen Satzes Beine (302,208,126) entlang der Längsachse (201) der bewegbaren Plattform (300,200,101) über einen Abschnitt des zweiten Satzes des mindestens einen Satzes Beine (302,208,126) hinaus erstreckt.

5. Bewegbare Plattform nach einem der Ansprüche 1 bis 4, ferner umfassend einen Vorspannmechanismus (218), der konfiguriert ist, um die bewegbare Plattform (300,200,101) in der Ausgangsposition vorzuspannen.

6. Bewegbare Plattform (300,200,101) nach Anspruch 5, wobei der Vorspannmechanismus (218) Torsionsfedern (220) umfasst, die an mindestens einer Verbindung zwischen dem mindestens einen Satz Beine (302,208,126) und dem mindestens einen des ersten Bodens oder des zweiten Bodens positioniert sind.

7. Bewegbare Plattform (300,200,101) nach Anspruch 5, wobei der Vorspannmechanismus (218) einen schwebenden Anschlag (222) umfasst, wobei der schwebende Anschlag (222) konfiguriert ist, um sich gegen eine Vorspannkraft des Vorspannmechanismus (218) zu drehen, wenn sich der mindestens eine Satz Beine (302,208,126) in einer Drehrichtung relativ zu dem mindestens einen des ersten Bodens oder des zweiten Bodens dreht.

8. Bewegbare Plattform (300,200,101) nach Anspruch 7, wobei der schwebende Anschlag (222) konfiguriert ist, um stationär zu bleiben, wenn sich der mindestens eine Satz Beine (302,208,126) gegen die Vorspannkraft des Vorspannmechanismus (218) in eine andere Drehrichtung relativ zu dem mindestens einen des ersten Bodens oder des zweiten Bodens dreht, wobei die andere Drehrichtung der einen Drehrichtung entgegengesetzt ist.

9. Bewegbare Plattform (300,200,101) nach einem der Ansprüche 1 bis 4, wobei ein oder mehrere Abschnitte der bewegbaren Plattform (300,200,101) mindestens einen Festanschlag (236) definieren, der konfiguriert ist, um die Drehung des mindestens einen Satzes Beine (302,208,126) relativ zu dem mindestens einen des ersten Bodens oder des zweiten Bodens zu stoppen.

10. Bewegbare Plattform (300,200,101) nach einem der Ansprüche 1 bis 4, wobei die bewegbare Plattform (300,200,101) konfiguriert ist, um eine Drehausrichtung des ersten Bodens relativ zu dem zweiten Boden beizubehalten, während sich der zweite Boden relativ zu dem ersten Boden verschiebt.

11. Fahrzeugerfassungssystem zur Verwendung mit einem Erfassungsfahrzeug, das Fahrzeugerfassungssystem umfassend:
eine Sondenanordnung (102) einschließlich eines oder mehrerer Halteelemente zum Ineingriffbringen mit und Sichern eines Zielfahrzeugs; und
eine bewegbare Plattform (300,200,101), die an mindestens einen Abschnitt der Sondenanordnung gekoppelt ist, die bewegbare Plattform (300,200,101) umfassend die bewegbare Plattform (300,200,101) nach einem der Ansprüche 1 bis 10.

12. Verfahren zum Erfassen eines Raumfahrzeugs, das Verfahren umfassend:
Ausstrecken einer Sonde einer Fahrzeugerfassungsanordnung (100) zu einem Zielraumfahrzeug an einem Ausleger, wobei die Fahrzeugerfassungsanordnung (100) an ein Erfassungsfahrzeug gekoppelt ist;
Ermöglichen einer Bewegung der Sonde relativ zu dem Erfassungsfahrzeug mit einer bewegbaren Plattform (300,200,101), wobei ein erster lateraler Bereich der bewegbaren Plattform (300,200,101) an die Sonde gekoppelt ist und ein zweiter lateraler Bereich der bewegbaren Plattform (300,200,101) an den Ausleger gekoppelt ist, wobei sich ein erster Satz drehbarer Beine (302,208,126) zwischen dem ersten lateralen Bereich und einer ersten Seite mindestens eines Zwischenbodens (206) erstreckt und sich ein zweiter Satz drehbarer Beine (302,208,126) zwischen einer zweiten Seite des mindestens einen Zwischenbodens (206) und dem zweiten lateralen Bereich erstreckt, das Ermöglichen der Bewegung der Sonde relativ zu dem Erfassungsfahrzeug mit der bewegbaren Plattform (300,200,101) umfassend:
Verschieben des ersten lateralen Bereichs relativ zu dem zweiten lateralen Bereich aus der Ausgangsposition durch Drehen der Beine (302,208,126) relativ zu dem ersten lateralen Bereich und dem zweiten lateralen Bereich; und
während des Verschiebens des ersten lateralen Bereichs relativ zu dem zweiten lateralen Bereich, im Wesentlichen Beibehalten einer Drehposition der Sonde; und
Ineingriffbringen der Sonde der Fahrzeugerfassungsanordnung (100) mit dem Zielraumfahrzeug.

13. Verfahren nach Anspruch 2, ferner umfassend, nach dem Verschieben des ersten lateralen Bereichs relativ zu dem zweiten lateralen Bereich, ein Zurückbringen der bewegbaren Plattform (300,200,101) in eine Ausgangsposition mit einem Vorspannmechanismus (218).

14. Verfahren nach Anspruch 13, ferner umfassend ein Minimieren einer toten Zone in der bewegbaren Plattform (300,200,101) durch Sichern der bewegbaren Plattform (300,200,101) in der Ausgangsposition mit dem Vorspannmechanismus und Ermöglichen, dass sich die bewegbare Plattform (300,200,101) in eine Verlagerungsposition bewegt, wenn ein Kraftschwellenwert überschritten wird.

15. Verfahren nach einem der Ansprüche 12 bis 14, ferner umfassend das Vorspannen der bewegbaren Plattform (300,200,101) in einer Ausgangsposition mit einem Vorspannmechanismus (218).

## Revendications

1. Plateforme mobile (300, 200, 101) destinée à être utilisée avec un ensemble de capture de véhicule (100) d'un véhicule de capture, la plateforme mobile (300, 200, 101) comprenant :
un premier plancher conçu pour être accouplé à une partie de l'ensemble de capture de véhicule (100) à proximité du véhicule de capture ;
un deuxième plancher conçu pour être accouplé à un ensemble sonde (102) de l'ensemble de capture de véhicule (100) ; et
au moins un ensemble de pieds (302, 208, 126) s'étendant entre le premier plancher et le deuxième plancher, l'au moins un ensemble de pieds (302, 208, 126) étant accouplé en rotation à au moins l'un du premier plancher ou du deuxième plancher et conçu pour tourner par rapport à l'au moins un parmi le premier plancher ou le deuxième plancher ;
dans laquelle la rotation de l'au moins un ensemble de pieds (302, 208, 126) par rapport à l'au moins un parmi le premier plancher ou le deuxième plancher permet à la plateforme mobile (300, 200, 101) de se mouvoir d'une position initiale à une position déplacée à mesure que le premier plancher effectue une translation latérale par rapport au deuxième plancher dans une direction transversale à un axe longitudinal (201) de la plateforme mobile (302, 208, 126) ; et
**caractérisée par** au moins un plancher intermédiaire (206) entre le premier plancher et le deuxième plancher, le premier plancher étant accouplé à l'au moins un plancher intermédiaire (206) sur un premier côté de l'au moins un plancher intermédiaire (206) avec un premier ensemble de l'au moins un ensemble de pieds (302, 208, 126), le deuxième plancher étant accouplé à l'au moins un plancher intermédiaire (206) sur un second côté de l'au moins un plancher intermédiaire (206) avec un second ensemble de l'au moins un ensemble de pieds (302, 208, 126).

2. Plateforme mobile (300, 200, 101) selon la revendication 1, dans laquelle le premier ensemble de l'au moins un ensemble de pieds (302, 208, 126) est décalé par rapport au second ensemble de l'au moins un ensemble de pieds (302, 208, 126) autour de l'axe longitudinal (201) de la plateforme mobile (300, 200, 101).

3. Plateforme mobile (300, 200, 101) selon la revendication 1, dans laquelle le premier ensemble de l'au moins un ensemble de pieds (302, 208, 126) et le second ensemble de l'au moins un ensemble de pieds (302, 208, 126) se chevauchent partiellement le long de l'axe longitudinal (201) de la plateforme mobile (300, 200, 101).

4. Plateforme mobile (300, 200, 101) selon la revendication 1, dans laquelle le premier ensemble de l'au moins un ensemble de pieds (302, 208, 126) et le second ensemble de l'au moins un ensemble de pieds (302, 208, 126) présentent une configuration emboîtée où une partie du premier ensemble de l'au moins un ensemble de pieds (302, 208, 126) s'étend le long de l'axe longitudinal (201) de la plateforme mobile (300, 200, 101) au-delà d'une partie du second ensemble de l'au moins un ensemble de pieds (302, 208, 126).

5. Plateforme mobile selon l'une quelconque des revendications 1 à 4, comprenant en outre un mécanisme de sollicitation (218) conçu pour solliciter la plateforme mobile (300, 200, 101) dans la position initiale.

6. Plateforme mobile (300, 200, 101) selon la revendication 5, dans laquelle le mécanisme de sollicitation (218) comprend des ressorts de torsion (220) positionnés au niveau d'au moins une union entre l'au moins un ensemble de pieds (302, 208, 126) et l'au moins un parmi le premier plancher ou le deuxième plancher.

7. Plateforme mobile (300, 200, 101) selon la revendication 5, dans laquelle le mécanisme de sollicitation (218) comprend une butée flottante (222), la butée flottante (222) étant conçue pour tourner à l'encontre d'une force de sollicitation du mécanisme de sollicitation (218) lorsque l'au moins un ensemble de pieds (302, 208, 126) tourne dans une direction de rotation par rapport à l'au moins un parmi le premier plancher ou le deuxième plancher.

8. Plateforme mobile (300, 200, 101) selon la revendication 7, dans laquelle la butée flottante (222) est conçue pour rester fixe lorsque l'au moins un ensemble de pieds (302, 208, 126) tourne à l'encontre de la force de sollicitation du mécanisme de sollicitation (218) dans une autre direction de rotation par rapport à l'au moins un parmi le premier plancher ou le deuxième plancher, l'autre direction de rotation étant opposée à la première direction de rotation.

9. Plateforme mobile (300, 200, 101) selon l'une quelconque des revendications 1 à 4, dans laquelle une ou plusieurs parties de la plateforme mobile (300, 200, 101) définissent au moins une butée (236) conçue pour arrêter la rotation de l'au moins un ensemble de pieds (302, 208, 126) par rapport à l'au moins un parmi le premier plancher ou le deuxième plancher.

10. Plateforme mobile (300, 200, 101) selon l'une quelconque des revendications 1 à 4, dans laquelle la plateforme mobile (300, 200, 101) est conçue pour maintenir une orientation en rotation du premier plancher par rapport au deuxième plancher lorsque le deuxième plancher effectue une translation par rapport au premier plancher.

11. Système de capture de véhicule destiné à être utilisé avec un véhicule de capture, le système de capture de véhicule comprenant :
un ensemble sonde (102) comportant un ou plusieurs éléments de retenue destinés à venir en prise avec un véhicule cible et l'immobiliser ; et
une plateforme mobile (300, 200, 101) accouplée à au moins une partie de l'ensemble sonde, la plateforme mobile (300, 200, 101) comprenant la plateforme mobile (300, 200, 101) de l'une quelconque des revendications 1 à 10.

12. Procédé de capture d'un engin spatial, le procédé comprenant :
l'extension d'une sonde d'un ensemble de capture de véhicule (100) vers un engin spatial cible sur une flèche, l'ensemble de capture de véhicule (100) étant accouplé à un véhicule de capture ;
le fait de permettre le mouvement de la sonde par rapport au véhicule de capture avec une plateforme mobile (300, 200, 101), une première section latérale de la plateforme mobile (300, 200, 101) étant accouplée à la sonde et une seconde section latérale de la plateforme mobile (300, 200, 101) étant accouplée à la flèche avec un premier ensemble de pieds rotatifs (302, 208, 126) s'étendant entre la première section latérale et un premier côté d'au moins un plancher intermédiaire (206) et un second ensemble de pieds rotatifs (302, 208, 126) s'étendant entre un second côté de l'au moins un plancher intermédiaire (206) et la seconde section latérale, le fait de permettre le mouvement de la sonde par rapport au véhicule de capture avec la plateforme mobile (300, 200, 101) comprenant :
la translation de la première section latérale par rapport à la seconde section latérale depuis la position initiale par rotation des pieds (302, 208, 126) par rapport à la première section latérale et à la seconde section latérale ; et
tout en effectuant une translation de la première section latérale par rapport à la seconde section latérale, le maintien sensiblement d'une position en rotation de la sonde ; et
la mise en prise de la sonde de l'ensemble de capture de véhicule (100) avec l'engin spatial cible.

13. Procédé selon la revendication 2, comprenant en outre, après la translation de la première section latérale par rapport à la seconde section latérale, le renvoi de la plateforme mobile (300, 200, 101) à une position initiale avec un mécanisme de sollicitation (218).

14. Procédé selon la revendication 13, comprenant en outre la minimisation de la zone morte dans la plateforme mobile (300, 200, 101) par immobilisation de la plateforme mobile (300, 200, 101) dans la position initiale avec le mécanisme de sollicitation et par le fait de permettre à la plateforme mobile (300, 200, 101) de se mouvoir jusqu'à une position déplacée lorsqu'un seuil de force est dépassé.

15. Procédé selon l'une quelconque des revendications 12 à 14, comprenant en outre la sollicitation de la plateforme mobile (300, 200, 101) dans une position initiale avec un mécanisme de sollicitation (218).
